# EUROPEAN PATENT SPECIFICATION

(11) **EP 0 468 066 B1**
(45) Date of publication and mention of the grant of the patent: **10.09.1997**
(21) Application number: 90114100.2
(22) Date of filing: 23.07.1990
(51) Int. Cl.: C04B 35/58, C04B 35/56, C04B 35/10, C04B 35/00

(54) **Process for molding ceramics using a liquid, curable ceramic precursor**
Verfahren zur Formgebung von Keramik unter Verwendung eines flüssigen, härtbaren Keramik-Ausgangsmaterials
Procédé pour le moulage de céramique utilisant un précurseur céramique liquide et apte à la prise

(43) Date of publication of application: 29.01.1992
(73) Proprietor: LANXIDE TECHNOLOGY COMPANY, LP, Newark, Delaware 19714-6077 (US)
(72) Inventor: Lukacs, Alexander, III, Wilmington, Delaware 19810 (US)
(74) Representative: Lederer, Franz, Dr.

(56) References cited:
- WO-A-88/07505
- DE-A- 3 007 384
- DE-A- 3 409 385
- US-A- 4 939 197
- CHEMICAL ABSTRACTS, vol. 110, no. 6, 6th February 1989, page 304, abstract no. 43759m, Columbus, Ohio, US; & JP-A-63 201 058 (FUJITSU LTD) 19-08-1988

## Description

This invention relates to a method for molding ceramics.

Ceramic materials are of critical importance for a number of high temperature, high performance applications such as engine parts and gas turbines. These applications require a unique combination of properties such as high specific strength, high temperature mechanical property retention, low thermal and electrical conductivity, hardness and wear resistance, and chemical inertness. However, the inability to produce complex shapes of high dimensional accuracy and sufficient strength using an economical fabrication technique has prevented ceramic materials from fulfilling their potential in these applications.

Several processes have been used in an attempt to form ceramic bodies. Such processes include pressing ceramic powder into a green body followed by sintering or by hot pressing and subsequently shaping or machining the sintered body to produce the finished product. Another technique is slip casting in which the ceramic particles are dispersed in water, the slurry placed in a mold and the water removed to form a green, i.e., unfired, body. The pressing techniques have been found unsuitable to form ceramic articles of complex shapes which must meet specific design specifications. The slip casting technique is time consuming and has not yielded green bodies of sufficient strength. In view of the problems associated with the prior techniques, the injection molding process has been increasingly used to form ceramic articles. Injection molding is a process wherein a moldable composition is forced into a mold or die. The injection molding process facilitates rapid and repeated forming of a plurality of articles having a close dimensional tolerance. The injection molding process minimizes the amount of shaping or machining that may be required to produce a finished article.

U.S. Patent 4,906,424 discusses the advantages of reaction injection molding of ceramics, in which an unheated fluid mixture of a binder and a ceramic powder are injected into a heated mold where a reaction occurs, compared to conventional injection molding, in which a hot molding composition is injected into a cold mold where the composition cools and solidifies. Although the reaction injection molding process described in U.S. 4.906,424 is an improvement over conventional injection molding of ceramics, it still requires the step of removing the binder after ejection of the hardened article from the mold.

U.S. Patent 4,939,197 discloses a composition for injection molding a ceramic powder, a binder system comprising a thermosetting polycarbosilane and a cross-linking inhibitor, and a surfactant. The cross-linking inhibitor is used to delay thermosetting and prevent premature cross-linking of the binder system.

There is still a need for a reaction injection molding process which avoids the necessity for removing the binder during the firing step. Such a process would avoid the deleterious effects of residual carbon and impurities on the high temperature strength of the sintered ceramic article that is produced.

According to the invention, there is provided a process for preparing a sintered ceramic article by injecting a mixture of a liquid binder and a ceramic and/or metal powder into a heated mold to harden the mixture and produce a molded article, and subsequently sintering the article to the desired density, characterized by (a) using as a binder a curable ceramic precursor that is a liquid below its curing temperature, (b) curing the ceramic precursor and ejecting the shaped article from the mold and, prior to sintering, (c) heating the hardened molded article under a suitable atmosphere to a temperature sufficient to convert the cured ceramic precursor to a ceramic, wherein the binder does not comprise a cross linking inhibitor.

The process according to the invention provides a method for reaction injection molding ceramic and metal powders to produce tough, strong green bodies that can subsequently be fired to produce a sintered product without a time-consuming and energy intensive binder removal step.

Any ceramic powder can be used in the process of this invention. Silicon nitride, silicon carbide and alumina are preferred. Suitable metal powders include, for example, silicon, aluminum and the transition metals. The ceramic and/or metal powder preferably comprises at least 40% and most preferably at least 50% by volume of the mixture. The percentage by weight will vary, depending on the density of the filler. Although the physical state of the metal and ceramic is referred to as a "powder" throughout this specification, it should be understood that the ceramic or metal can also be present in various other forms such as fibers, whiskers or platelets.

The ceramic precursor used in the process of this invention is a liquid at temperatures below its curing temperature and is capable of dispersing a large volume of the ceramic and/or metal powder while still having a viscosity that is low enough so that the mixture of ceramic powder and ceramic precursor is flowable. The molecular weight of the precursor is preferably low enough so that the mixture of powder and precursor is not dilatant, i.e., the viscosity does not increase as shear is applied to the material.

The ceramic precursors can be monomeric or polymeric and include, for example, polysilazanes, polyureasilazanes, polythioureasilazanes, polycarbosilanes and polysiloxanes. These precursors preferably contain alkenyl, alkynyl, epoxy, acrylate or methacrylate substitution to facilitate curing by a free radical or ionic mechanism. Specific examples of ceramic precursors include poly(acryloxypropylmethyl)siloxane, glycidoxypropylmethyldimethylsiloxane copolymer, polyvinylmethylsiloxane, poly(methylvinyl)silazane, 1,3,5-trimethyl-1,3,5-trivinyltrisilazane, 1,3,5,7-tetramethyl-1,3,5,7-tetravinyltetrasilazane, 1,3,5,7-tetravinyltetramethylcyclotetrasiloxane, tris(vinyldimethylsiloxy)methylsilane, and trivinylmethylsilane.

The ceramic precursor and the ceramic and/or metal powder can be mixed by milling, or they can be mixed without milling. Processing aids such as dispersants, rheology modifiers, sintering aids and lubricants can also be added to the mixture.

The ceramic precursor is cured in the mold by the application of heat. The time required for curing is generally less than five minutes, and can be less than one minute. The method and time required for curing depends upon the type of precursor used and can readily be determined by one skilled in the art. The mixture of ceramic precursor and ceramic and/or metal powder can also include a free radical source, curing agent or catalyst, depending upon the type of precursor used. The green bodies that are formed by curing of polysilazane ceramic precursors have unusual strength and toughness, i.e., they can be thrown against a concrete floor without any visible damage. The flexural strength of the green body is generally greater than 1.0 MPa measured by a four point bend technique on a thin bar sample.

After curing of the ceramic precursor, the shaped article is ejected from the mold and heated under a suitable atmosphere to convert the ceramic precursor to a ceramic, and then heated under a suitable atmosphere to a temperature sufficient to densify the article. The densified articles retain their net shape after firing. The term densify is meant to include solid phase sintering, liquid phase sintering and reaction bonding. The atmosphere selected for each of these steps may be the same or different, and depends upon the type of ceramic that is desired in the final product. For example, if a silicon nitride product is desired, a polysilazane can be pyrolyzed under an ammonia atmosphere to maximize the ceramic yield and then sintered under a nitrogen atmosphere, which is less expensive and less dangerous to use than ammonia. Alternatively, a silicon carbide product can be obtained by using a polysilazane ceramic precursor and treating under an argon atmosphere for both steps. As a further example, a silicon dioxide product can be obtained by using a polysilazane ceramic precursor and treating under an atmosphere of air or oxygen in both steps. A silicon nitride product can also be obtained from a mixture of silicon metal and a polysilazane ceramic precursor by pyrolyzing the polysilazane in ammonia, and then nitriding the silicon metal and densifying the material in an atmosphere comprising a mixture of hydrogen, helium and nitrogen.

### Example 1

Poly(methylvinyl)silazane is prepared as follows. A 5 liter, three-necked flask is equipped with an overhead mechanical stirrer, a dry ice/acetone condenser (-78°C), an ammonia/nitrogen inlet tube and a thermometer. The apparatus is sparged with nitrogen and then charged with hexane (1760 ml, dried over 4 A molecular sieves), methyldichlorosilane (209 ml, 230.9 g, 2.0 mol) and vinylmethyldichlorosilane (64 ml, 69.6 g, 0.5 mol). The ammonia is added at a rate of 3.5 1/min (9.37 mol) for one hour. During the addition, the temperature of the reaction rises from 25°C to 69°C. After one hour, the ammonia flow is stopped and the reaction mixture cooled to room temperature. The reaction mixture is filtered on a glass-fritted funnel to remove the precipitated ammonium chloride. The hexane is removed from the filtrate under reduced pressure (28 mm Hg, 60°C) to give (CH₃SiHNH)-_{0.8}(CH₃SiCH=CH₂NH)_{0.2} as a clear oil (150.76 g, 2.34 mol, 94% yield). The oil has a viscosity of 43 cps at 25°C and a molecular weight of 560 g/mol.

A mixture of 80 g silicon powder, 25 g poly(methylvinyl)-silazane, 0.15 g dicumyl peroxide and 100 ml 1,1,1-trichloroethane is mixed in a jacketed resin kettle with a stirring blade. The solvent is stripped off under vacuum using steam heat. The blend is injection molded into a steel die using 800 psi (56 kg/cm²) of pressure on the injection ram. The filled die is subsequently heated to 150°C to cure the polysilazane. After removal from the die, the part can be forcibly thrown against a concrete floor with no visible damage. The parts are heated at 55°C per hour up to 1000°C and then at 100°C per hour up to 1350°C in a mixed nitrogen-hydrogen atmosphere to convert the poly(methylvinyl)silazane to silicon nitride and densify the material. The net shape of the article is retained after densification.

### Example 2

A mixture of 454 g silicon nitride powder, 23 g alumina powder, 23 g yttria powder, 5 g of the poly(methylvinyl)-silazane prepared as described in Example 1 and 600 ml 1,1,1-trichloroethane is milled in a vibratory mill using a silicon nitride grinding medium. The mixture is stripped of solvent. A portion of the mix (380 g) is blended with 145 g poly(methylvinyl)silazane, 1 g dicumyl peroxide, 1.0 g glycerol monooleate, and 250 ml 1,1,1-trichloroethane. The solvent is stripped and the blend is injection molded using 600 psi (42 kg/cm²) on the ram at a die temperature of 150°C. The parts are heated at 55°C per hour up to 1000°C and then at 100°C per hour up to 1600°C in a nitrogen atmosphere to convert the poly(methylvinyl)silazane to silicon nitride and density the material. The net shape of the article is retained after densification.

### Example 3

Silicon powder (52 g) is mixed with 30 g silicon nitride. A portion of this mixture (78 g) is blended with 30 g of the poly(methylvinyl)silazane prepared as described in Example 1, 0.2 g dicumyl peroxide, and 100 ml 1,1,1-trichloroethane. After stripping off the solvent, the blend is injection molded and cured using 800 psi (56 kg/cm²) of pressure on the ram and a die temperature of 150°C. A tough, strong green body is obtained. The part is heated in a nitrogen atmosphere to a temperature greater than 1000°C sufficient to convert the poly(methylvinyl)silazane to a silicon nitride-containing ceramic and density the material. The net shape of the article is retained after densification.

### Example 4

A mixture of 50 g silicon carbide powder, 50 g of the poly(methylvinyl)silazane prepared as described in Example 1, 0.4 g dicumyl peroxide, and 100 ml 1,1,1-trichloroethane is mixed in a jacketed resin kettle. The solvent is stripped and the mix is injection molded and then cured at 150°C. The parts are heated to 1600°C in in argon atmosphere to convert the poly(methylvinyl)silazane to silicon carbide. The net shape of the article is retained.

### Example 5

Silicon carbide whiskers (4.5 g) are mixed with 6.7 g of the poly(methylvinyl)silazane prepared as described in Example 1 and containing 0.05 g dicumyl peroxide. The mixture is injection molded and then cured at 150°C. The parts are heated to 1600°C in in argon atmosphere to convert the poly(methylvinylsilazane) to silicon carbide. The net shape of the article is retained.

### Example 6

A jar is equipped with a stir bar and charged with 1.5 g silicon nitride powder, 5.0 g of 1,3,5,7-tetramethyltetravinylcyclotetrasiloxane and 0.01 g dicumyl peroxide. After thorough mixing, the reaction mixture is injection molded and then heated to 170°C over a period of 15 minutes. At 170°C, the fluid mix cures to a solid piece which, after cooling to room temperature, is easily handled. The part is heated to a temperature greater than 1000°C sufficient to convert the cyclosiloxane to a ceramic and densify the material.

### Example 7

A polyureasilazane is prepared as follows. A 100 ml one-necked flask is equipped with a stir bar and septum and sparged with nitrogen. The flash is then charged with poly(methylvinyl)silazane prepared as described in Example 1, and 0.1 wt % of phenylisocyanate. The reaction apparatus is placed in an oil bath on a stirrer/hot plate and the septum is replaced with a water condensor topped with a septum. A nitrogen inlet needle and oil bubbler outlet are placed in the septum. The reaction mixture is heated at 110°C for 20 hours. A yellow, viscous oil having a viscosity of 1298 cps is produced.

Polyureasilazane (5.0 g) prepared as described above is stirred with 0.05 g dicumyl peroxide, 15.0 g silicon nitride powder, and 15.0 ml methylene cloride until a homogeneous mixture is obtained. The methylene chloride is stripped off under nitrogen. The resulting mixture is injection molded and then cured at 150°C to yield a strong, hard green part. The part is heated to a temperature greater than 1000°C sufficient to convert the polyureasilazane to a ceramic and densify the material.

### Example 8

A jar is equipped with a stir bar and charged with 2.06 g silicon nitride powder, 4.01 g of a mixture of 1,3,5-trimethyltrivinylcyclotrisilazane and 1,3,5,7-tetramethyltetravinylcyclotetrasilazane (70:30 mol ratio prepared by the ammonolysis of methylvinyldichlorosilane) and 0.01 g dicumyl peroxide. The reaction mixture is injection molded and then heated to 185°C over a period of 30 minutes. At 185°C, the fluid slurry cures to a solid piece which, after cooling to room temperature, is easily handled. The part is heated in nitrogen to a temperature greater than 1000°C sufficient to convert the cyclosilazanes to a silicon nitride-containing ceramic and densify the material.

### Example 9

Alumina powder (50 g), 15.0 g of the poly(methylvinyl)silazane prepared as described in Example 1, 0.2 g dicumyl peroxide and 75 g 1,1,1-trichloroethane are mixed and the solvent is stripped off. The resulting mixture is injection molded and then heated to 150°C. The cured part is heated at 60°C per hour up to 1600°C in air to convert the poly(methylvinyl)silazane to silica and produce an alumina/silica-containing ceramic material.

## Claims

1. A process for preparing a sintered ceramic article by injecting a mixture of a liquid binder and a ceramic and/or metal powder, into a heated mold to harden the mixture and produce a molded article, and subsequently sintering the article to the desired density, characterized by (a) using as a binder a curable ceramic precursor that is a liquid below its curing temperature, (b) curing the ceramic precursor and ejecting the shaped article from the mold and, prior to sintering, (c) heating the hardened molded article under a suitable atmosphere to a temperature sufficient to convert the cured ceramic precursor to a ceramic, wherein the binder does not comprise a cross linking inhibitor.

2. The process of claim 1, further characterized in that the powder is present in an amount of at least 40% by volume.

3. The process as claimed in claim 1 or 2, further characterized in that the mixture of ceramic and/or metal powder and binder also comprises a free radical source, and the ceramic precursor is cured by heating.

4. The process as claimed in claim 1, 2, or 3, further characterized in that the ceramic powder is silicon nitride.

5. The process as claimed in claim 1, 2, or 3, further characterized in that the powder is silicon metal and silicon nitride.

6. The process as claimed in claim 1, 2, or 3, further characterized in that the ceramic powder is silicon carbide.

7. The process as claimed in claim 1, 2, or 3, further characterized in that the ceramic powder is alumina.

8. The process as claimed in claim 1, 2, or 3, further characterized in that the powder is silicon metal, and the atmosphere used in step (c) and the sintering step is a nitrogen-containing atmosphere.

9. The process as claimed in any of the preceding claims, further characterized in that the ceramic precursor is a poly(methylvinyl)silazane.

10. The process as claimed in any of claims 1-8, further characterized in that the ceramic precursor is a polyureasilazane or polythioureasilazane.

11. The process as claimed in any of claims 1-8, wherein the ceramic precursor is a non-dilatant liquid.

## Patentansprüche

1. Verfahren zur Herstellung eines gesinterten keramischen Produkts, bei dem ein Gemisch aus einem flüssigen Bindemittel und einem Keramik- und/oder Metallpulver in eine erhitzte Form gespritzt wird, wodurch das Gemisch ausgehärtet und ein geformtes Produkt gebildet wird, und anschließend das Produkt bis zur gewünschten Dichte gesintert wird, gekennzeichnet durch (a) die Verwendung einer vernetzbaren Keramikvorstufe als Bindemittel, die unterhalb ihrer Vernetzungstemperatur flüssig ist, (b) Vernetzen der Keramikvorstufe und Herauslösen des geformten Produkts aus der Form und, vor dem Sintern, (c) Erhitzen des gehärteten, geformten Produkts in einer geeigneten Atmosphäre auf eine Temperatur, die ausreicht, um die vernetzte Keramikvorstufe in eine Keramik zu überführen, wobei das Bindemittel keinen Vernetzungsinhibitor umfaßt.

2. Verfahren nach Anspruch 1, dadurch gekennzeichnet, daß das Pulver in einer Menge von zumindest 40 Volumenprozent vorliegt.

3. Verfahren nach Anspruch 1 oder 2, dadurch gekennzeichnet, daß das Gemisch aus Keramik- und/oder Metallpulver und Bindemittel weiterhin eine Quelle freier Radikale umfaßt, und die Keramikvorstufe durch Erhitzen vernetzt wird.

4. Verfahren nach Anspruch 1, 2 oder 3, dadurch gekennzeichnet, daß das Keramikpulver Siliciumnitrid ist.

5. Verfahren nach Anspruch 1, 2 oder 3, dadurch gekennzeichnet, daß das Pulver Siliciummetall und Siliciumnitrid ist.

6. Verfahren nach Anspruch 1, 2 oder 3, dadurch gekennzeichnet daß das Keramikpulver Siliciumcarbid ist.

7. Verfahren nach Anspruch 1, 2 oder 3, dadurch gekennzeichnet, daß das Keramikpulver Aluminiumoxid ist.

8. Verfahren nach Anspruch 1, 2 oder 3, dadurch gekennzeichnet, daß das Pulver Siliciummetal ist, und die in Schritt (c) und dem Sinter-Schritt verwendete Atmosphäre eine stickstoffhaltige Atmosphäre ist.

9. Verfahren nach einem der vorstehenden Ansprüche, dadurch gekennzeichnet, daß die Keramikvorstufe ein Poly(methylvinyl)silazan ist.

10. Verfahren nach einem der Ansprüche 1 bis 8, dadurch gekennzeichnet, daß die Keramikvorstufe ein Polyharnstoffsilazan oder ein Polythioharnstoffsilazan ist.

11. Verfahren nach einem der Ansprüche 1 bis 8, wobei die Keramikvorstufe eine nicht-dilatante Flüssigkeit ist.

## Revendications

1. Procédé de préparation d'un article céramique fritté par injection d'un mélange d'un liant liquide et d'une poudre de céramique et/ou de métal, dans un moule chauffé pour durcir le mélange et produire un article moulé, et ensuite par frittage de l'article jusqu'à la densité désirée, caractérisé par (a) l'utilisation en tant que liant d'un précurseur de céramique durcissable qui est liquide en dessous de sa température de durcissement, (b) le durcissement du précurseur de céramique et l'éjection du moule de l'article formé et, avant le frittage, (c) le chauffage de l'article moulé durci sous une atmosphère adéquate à une température suffisante pour transformer le précurseur de céramique durci en une céramique, où le liant ne comprend pas d'inhibiteur de réticulation.

2. Procédé selon la revendication 1, caractérisé en outre en ce que la poudre est présente en une quantité d'au moins 40 % en volume.

3. Procédé selon l'une quelconque des revendications 1 et 2, caractérisé en outre en ce que le mélange de poudre de céramique et/ou de métal et de liant comprend également une source de radicaux libres, et le précurseur de céramique est durci par chauffage.

4. Procédé selon l'une quelconque des revendications 1, 2 et 3, caractérisé en outre en ce que la poudre de céramique est en nitrure de silicium.

5. Procédé selon l'une quelconque des revendications 1, 2 et 3, caractérisé en outre en ce que la poudre est en silicium métallique et en nitrure de silicium.

6. Procédé selon l'une quelconque des revendications 1, 2 et 3, caractérisé en outre en ce que la poudre de céramique est en carbure de silicium.

7. Procédé selon l'une quelconque des revendications 1, 2 et 3, caractérisé en outre en ce que la poudre de céramique est en oxyde d'aluminium.

8. Procédé selon l'une quelconque des revendications 1, 2 et 3, caractérisé en outre en ce que la poudre est en silicium métallique, et l'atmosphère utilisée dans l'étape (c) et dans l'étape de frittage est une atmosphère contenant de l'azote.

9. Procédé selon l'une quelconque des revendications 1 à 8, caractérisé en outre en ce que le précurseur de céramique est un poly(méthylvinyl)silazane.

10. Procédé selon l'une quelconque des revendications 1 à 8, caractérisé en outre en ce que le précurseur de céramique est un polyuréesilazane ou un polythioruéesilazane.

11. Procédé selon l'une quelconque des revendications 1 à 8, où le précurseur de céramique est un liquide non-thixotrope.
